# EUROPÄISCHE PATENTSCHRIFT

(11) **EP 2 730 738 B1**
(45) Veröffentlichungstag und Bekanntmachung des Hinweises auf die Patenterteilung: **29.07.2015**
(21) Anmeldenummer: 13005091.7
(22) Anmeldetag: 25.10.2013
(51) Int. Cl.: E06B 9/66, E06B 9/64, E06B 9/40, A01G 9/22

(54) **Wickelvorrichtung zur Abdeckung von Öffnungen in Wandabschnitten**
Winding device for covering openings in wall sections
Dispositif à enroulement destiné à recouvrir des ouvertures dans des sections de mur

(30) Priorität: 12.11.2012 DE 102012022001
(43) Veröffentlichungstag der Anmeldung: 14.05.2014
(73) Patentinhaber: Lock Antriebstechnik GmbH, 88521 Ertingen (DE)
(72) Erfinder: Niederer, Patrick, 88499 Riedlingen-Zwiefaltendorf (DE)
(74) Vertreter: Dobler, Markus

(56) Entgegenhaltungen:
- EP-A1- 1 388 637
- WO-A1-2005/010313
- DE-U1- 29 824 480
- DE-U1-202004 005 934

## Beschreibung

### Stand der Technik

Wickelvorrichtungen bzw. wickelnde Jalousie- oder Schattungssysteme mit einem flächigen, flexiblen Abdeckelement, zum Beispiel eine Plane oder Folie, zum zeitweisen Abdecken einer Öffnung an einem Wand- oder Dachabschnitt sind bekannt. Derartige Anordnungen dienen insbesondere zur Regulierung eines Wärme- oder Luftaustausches oder eines Lichteinfalles über die Öffnung beispielsweise bei Gebäuden in der Landwirtschaft wie Stallungen, Gewächshäuser oder Lagerräumen.

Dabei sind aufgrund regelmäßig rauer Umgebungsbedingungen am Einsatzort mit beispielsweise wetterbedingten Höchstbelastungen bzw. bei großräumigen Anwendungen insbesondere robuste Anordnungen vorteilhaft. Außerdem ist durch häufig notwendige Vielfachanordnungen von identischen Systemen eine montagefreundliche und ressourcenschonende Vorgehensweise von zentraler Bedeutung.

Die WO 2005/010313 A1 betrifft ein Abschirmsystem für eine Reihe von Gebäudeöffnungen umfassend eine drehende Hilfswelle mit mehreren Wickelrollen für das Aufwickeln von Streifen, welche am oberen Rand eines Abschirmmaterials angebracht sind.

Die EP 1 388 637 A1 schlägt eine Wickeljalousie zur Abdeckung von Gebäudeöffnungen vor, wobei mit einem Wickelelement zwei beidseitig des Wickelelements angeordnete Teilbereiche eines Abdeckelements gleichzeitig auf- bzw. abwickelbar sind.

Aus der DE 20 2004 005 934 U1 ist ein Wickel-Ausgleich für eine wickelbare Wand mit einer Seil-Wickelrolle und einer Planen- Wickelrolle bekannt.

In der DE 298 24 480 U1 ist eine Wickeljalousie zur Lüftung bzw. Verdunklung von Gebäuden thematisiert, wobei eine Nachführeinheit zur Absenkung eines oberen Randes des Abdeckelements vorgeschlagen wird.

### Aufgabe und Vorteile der Erfindung

Aufgabe der vorliegenden Erfindung ist es, einleitend genannte Anordnungen zu verbessern, um insbesondere die vorgenannten Hauptanforderungen an die betreffenden Systeme vorteilhaft zu erfüllen.

Diese Aufgabe wird durch den unabhängigen Anspruch gelöst.

Die abhängigen Ansprüche betreffen zweckmäßige und vorteilhafte Varianten der Erfindung.

Die Erfindung geht aus von einer Wickelvorrichtung zum Abdecken einer Öffnung, insbesondere in einem im Wesentlichen vertikalen Wandabschnitt, umfassend ein flächiges, flexibles Abdeckelement zur mindestens teilweisen Abdeckung der Öffnung, ein mit einer Antriebseinheit drehbares und am Abdeckelement angreifendes längliches Wickelelement, mit dem abhängig von der Drehrichtung des Wickelelements das Abdeckelement auf das Wickelelement aufwickelbar und von diesem wieder abwickelbar ist, wobei eine Verstelleinheit vorhanden ist, welche während des Wickelvorgangs einen bewegbaren oberen Rand des Abdeckelements absenkt oder anhebt, ohne einen Wickelvorgang des bewegbaren oberen Randes. Der bewegbare obere Rand wird also insbesondere nicht auf- oder abgewickelt, sondern allein translatorisch abgesenkt und angehoben. Das Absenken des oberen Rands findet insbesondere unterstützt durch die Gewichtskraft des am oberen Rand nach unten sich anschließenden Teils des Abdeckelementes statt. Beim Aufwickeln des Abdeckelements schlingt sich dieses spiralförmig eng anliegend um die Außenseite des Wickelelements ggf. um zuvor bereits aufgewickelte Schichten des Abdeckelements und bildet so einen meist zylindrischen Wickel auf dem Wickelelement. Bei umgekehrter Drehrichtung des Wickelelements wird dieser Wickel beim Abwickeln kontrolliert wieder entsprechend abgewickelt und die zuvor aufgewickelten Bereiche des Abdeckelements werden wieder freigegeben, so dass diese Bereiche flächig für Abdeckzwecke zur Verfügung stehen. Die abzudeckenden Öffnungen sind meist an vertikalen Abschnitten oder an etwas geneigten Abschnitten von Wänden oder Dachelementen ausgebildet. Gegebenenfalls sind seitliche Führungen für ein definiertes Entlangbewegen der seitlichen Ränder des Abdeckelements vorgesehen.

Der wesentliche Aspekt der Erfindung liegt darin, dass Übertragungsmittel für ein Zusammenwirken der Antriebseinheit und des Wickelelements vorgesehen sind, mit einem wickelbaren Zugelement, das zwischen einem ersten drehbaren Wickelkörper und einem zweiten drehbaren Wickelkörper derart aufgenommen ist, dass das Zugelement mit dem ersten von der Antriebseinheit antreibbaren Wickelkörper auf- und abwickelbar ist, wobei der zweite Wickelkörper und das Wickelelement miteinander drehgekoppelt sind und wobei mit einem Abwickelvorgang des Zugelements vom zweiten Wickelkörper das Abdeckelement aufwickelbar ist.

Das Wickelelement zum Einstellen der Abdeckfläche ist derart am Abdeckelement angeordnet, dass zwei beidseitig des Wickelelements angeordnete Teilbereiche des Abdeckelements gleichzeitig auf das bzw. von dem Wickelelement auf- bzw. abwickelbar sind. Darunter fällt beispielsweise eine sogenannte Mittenwicklung, bei am Abdeckelement mittiger Anordnung des Wickelelements, die sich von der Einfachwicklung unterscheidet.

Bei der Einfachwicklung greift allein der untere Rand des Abdeckelements an dem Wickelelement an, so dass mit dem Aufwickeln der daran anschließende Bereich des Abdeckelements fortschreitend vom unteren Rand her aufwickelbar ist bzw. beim Abwickeln beginnend mit dem vom unteren Rand entferntesten bzw. zuletzt aufgewickelten Bereich des Abdeckelements wieder von dem Wickel freikommt.

Mit der Mittenwicklung kann ausgehend von der gleichen Anzahl von Umdrehungen und bei gleichem Wickelumfang des Wickelelements eine zur Einfachwicklung doppelte Fläche des Abdeckelements aufgewickelt bzw. wieder abgewickelt werden. Das Wickeln bei der Mittenwicklung erfolgt also effektiver bzw. schneller gegenüber der entsprechenden Einfachwicklung.

Auch sind Ausgleichmittel derart vorhanden, dass das Wickelelement quer zu einer Längsachse des Wickelelements verschiedene Positionen einnehmen kann. Dabei ist zu unterscheiden zum einen zwischen geringen möglichen Positionsveränderungen des seine Position im Gesamtsystem nicht zwingend verändernden Wickelelements, zum Beispiel zum Ausgleich von vergleichsweise geringen Laufunterschieden des oberen Randes und des unteren Randes des Abdeckelements, und zum anderen zwischen bewusst bzw. notwendigerweise vorgegebenen Bewegungswegen des Wickelelements, da mit dem Wickelvorgang zwangsweise bzw. gewollt eine wesentliche Positionsänderung des Wickelelements bedingt ist.

Gemäß des ersten Falles können Spannungs- und/oder Kraftspitzen im System ausgeglichen werden, womit eine Ausrückbewegung des Wickelelements in horizontaler oder vertikaler Richtung bzw. schräg dazu möglich ist und damit Schäden am System ausgeschlossen sind.

Der zweite Fall betrifft insbesondere definierte Nachführbewegungen des Wickelelements in die Richtung, in welche sich das Abdeckelement gemäß dem Absenken oder Anheben des bewegbaren oberen Randes bewegt.

Auch weisen die Ausgleichsmittel ein verfahrbares Schiebeelement auf, mit welchen der zweite Wickelkörper entlang eines vorgebbaren Weges nachführbar ist, während sich der bewegbare obere Rand des Abdeckelements absenkt oder anhebt. Insbesondere können Führungsorgane zur linearen Führung des zweiten Wickelkörpers vorhanden sein, insbesondere für eine Bewegung in vertikaler Richtung, beispielsweise mit einer Schienenanordnung, die eine vertikale Schiene aufweist, an dem das Schiebeelement zum Beispiel ein geführter Schlitten entlangbewegbar ist.

Dabei ist es grundlegend, dass die Absenk- und die Anhebebewegung des oberen Randes des Abdeckelements simultan zum Wickelvorgang des Abdeckelements erfolgt. Mit den Übertragungsmitteln kann eine Wirkverbindung zwischen der Antriebseinheit und dem anzutreibenden Wickelelement über entsprechende Abstände platzsparend und mit geringem Aufwand eingerichtet werden. Insbesondere wird eine sehr zuverlässige und stabile und trotzdem leichte und bei Belastungsspitzen ggf. geringfügig nachgebende Anordnung bereitgestellt.

Insbesondere ist ein materialsparender Aufbau für das Zusammenspiel zwischen der Antriebseinheit und dem Wickelelement möglich. Auch gegebenenfalls räumliche Gegebenheiten, die eine geradlinige bzw. einfache rechtwinklige Verbindung zwischen der Antriebseinheit und dem Wickelelement ausschließen, lassen sich mit einem im räumlichen Verlauf ohne Weiters vielfältig anpassbaren Zugelement erfindungsgemäß problemlos bedienen.

Des Weiteren ist trotz der hohen Belastbarkeit auf Zug von insbesondere länglichen dünnen Zugelementen wie zum Beispiel Stahlseilen eine gewisse Flexibilität bzw. Nachgiebigkeit des Abdeckelements in Richtung entgegen der wirkenden Zugbelastung mit dem Zugelement möglich. Dies kann beispielsweise bei stoßartigen Einwirkungen auf das Abdeckelement bzw. daran anschließende Einrichtungen von Vorteil sein, um Beschädigungen zu verhindern, die ansonsten bei statischen bzw. nahezu starren Systemen auftreten können, zum Beispiel bei wetterabhängig Einflüssen wie Sturmböen oder Schnee- und Regenlasten. Diesbezüglich sind Anordnungen mit starren Verbindungen mit Übertragungswellen und dazu passenden Getrieben weniger tolerant und zudem vergleichsweise aufwändig.

Das gespannt zwischen den Wickelkörpern verlaufende Zugelement ist insbesondere jeweils mit einem Ende am ersten Wickelkörper und mit einem anderen Ende am zweiten Wickelkörper verbunden. In den Endwickelzuständen des Wickelelements, was einem komplett abgesenkten oder komplett angehobenen Abdeckelement an der Öffnung entspricht, ist zumindest an einem Wickelkörper das Zugelements mit wenigstens einer Länge aufgewickelt, die der gesamt zu überbrückenden Abmessung der Öffnung in Auf- bzw. Abwickelrichtung betrachtet entspricht. Am anderen Wickelkörper kann das Zugelement ggf. ohne Umschlingung angreifen, in der Regel aber mit einem vergleichsweise geringen noch verbleibenden Umschlingungsgrad. Die notwendige Gesamtlänge des Zugelements entspricht demgemäß wenigstens der relevanten Abmessung der Öffnung in Richtung der Bewegung des oberen Randes des Abdeckelements also insbesondere gemäß einer vertikalen Höhe der abzudeckenden Wandöffnung.

Ein Abwickelvorgang des Zugelements vom ersten Wickelkörper erfolgt zeitgleich mit einem Aufwickelvorgang des Zugelements am zweiten Wickelkörper und umgekehrt. Mit dem angetriebenen Aufwickeln des Zugelements bzw. dem dabei stattfindenden Wickelvorgang erfolgt eine Drehbewegungskopplung bzw. - übertragung von dem ersten Wickelkörper auf den zweiten Wickelkörper. Der zweite Wickelkörper ist außerdem mit dem Wickelelement derart gekoppelt, dass eine Drehbewegung des Wickelelements, was beim Hochziehen des Abdeckelements bzw. des oberen Randes zwangsweise erfolgt, eine Drehbewegung des zweiten Wickelkörpers bedingt, so dass entsprechend einer gleichzeitig von dem ersten Wickelkörper abgewickelte Zugelementlänge auf den zweiten Wickelkörper aufgewickelt wird und das Zugelement gespannt bleibt. Bevorzugt befindet sich der zweite Wickelkörper in einem Bereich seitlich neben dem Abdeckelement bzw. in zur Drehachse des Wickelelements axialer Richtung seitlich benachbart zum Wickelelement.

Das Zugelement ist insbesondere flexibel und biegefähig bzw. gemäß einer runden oder anderen Außenform eines Wickelkörperabschnitts, auf welchen das Zugelement auf- und abwickelbar ist, umschlingend an dem Wickelkörperabschnitt anschmiegbar.

Das Zugelement kann insbesondere ein Stahlseil oder ein anderes längliches flexibles bzw. dünnes ggf. flaches Element sein.

Weiter ist es vorteilhaft, dass der erste Wickelkörper von der Antriebseinheit drehbar antreibbar ist. Der erste Wickelkörper ist beispielsweise an einem von der Antriebseinheit drehantreibbaren Wellenabschnitt aufgenommen. Der Wellenabschnitt ist insbesondere zumindest nahezu horizontal ausgerichtet, bevorzugt im Bereich der Antriebseinheit selbst positioniert. Damit kann eine kompakte Anordnung realisiert werden.

Die Wickelkörper drehen insbesondere um eine Drehachse, welche jeweils bevorzugt parallel zur Drehachse des Wickelelements ausgerichtet ist. Die Wickelköper sind bevorzugt mit einem zylindrischen Wickelabschnitt oder ggf. einem leicht kegeligen bzw. konischen Wickelabschnitt versehen, auf welchem das Zugelement aufwickelbar ist.

Insbesondere sind die Wickelkörper austauschbar bzw. lösbar an einer jeweiligen Aufnahme bzw. der erste Wickelkörper an dem Wellenabschnitt angebracht. Die Wickelkörper können beidseitig hochgezogene Ränder aufweisen, sodass das Zugelement nicht seitlich vom Wickelabschnitt des Wickelkörpers abrutschen kann.

Eine weitere vorteilhafte Variante der Erfindung zeichnet sich dadurch aus, dass eine fest positionierte Drehwelle vorgesehen ist, welche von der Antriebseinheit drehbar antreibbar ist, wobei der bewegbare obere Rand des Abdeckelements abhängig von der Drehrichtung der Drehwelle absenkbar oder anhebbar ist. Damit wird eine stabile und platzsparende Anordnung zum Anheben und Absenken des oberen Rands des Abdeckelements realisiert. Insbesondere kann über die Länge der Drehwelle, die insbesondere durchgehend über die komplette entsprechende Breite der Öffnung verläuft, auf beliebige Stellen entlang des gesamten oberen Randes des Abdeckelements für dessen Bewegung in vertikaler Richtung eingewirkt werden.

Die Drehwelle ist insbesondere Teil der Verstelleinheit.

Weiter wird gemäß einer vorteilhaften Erfindungsvariante vorgeschlagen, dass am bewegbaren oberen Rand des Abdeckelements ein wickelbares Zugmittel angreift, welches derart antreibbar auf- und abwickelbar ist, dass der bewegbare obere Rand des Abdeckelementes abhängig vom Wickelfortschritt anhebbar und absenkbar ist. Auch diese Anordnung ist der Verstelleinheit zuzuordnen. Damit wird eine Drehbewegung in eine lineare Bewegung umgesetzt.

Es ist besonders vorteilhaft, dass das wickelbare Zugmittel mittels der Drehwelle auf- und abwickelbar ist. Das Auf- und Abwickeln des Zugmittels erfolgt zum Beispiel mit Hilfe eines mit der Drehwelle drehbaren Wickelkörpers, an dem das Zugmittel mit einem Ende angreift und auf- und abwickelbar ist, wobei sich der nicht aufgewickelte Teil des Zugmittels entsprechend verkürzt bzw. verlängert und dabei den oberen Rand des Abdeckelements in Wickelrichtung bewegt. Dazu greift das nicht am Wickelkörper angreifende Ende des Zugmittels an dem oberen Abdeckelementrand an.

Dies kann an genau einer insbesondere über die Breite des Abdeckelements bzw. dessen oberen Randes betrachtet mittig liegenden Stelle erfolgen. Vorteilhaft ist ein Angreifen von zwei Zugmittelelementen an mindestens zwei Stellen am oberen Rand. Die Drehwelle ist insbesondere horizontal ausgerichtet, insbesondere nur wenig oberhalb einer oberen Begrenzung der abzudeckenden Öffnung parallel dazu platziert.

Bevorzugt ist in Verlängerung bzw. ggf. fluchtend zur Drehwelle der erste Wickelkörper bzw. der Wellenabschnitt, an welchem der erste Wickelkörper vorhanden ist, positioniert. Gegebenenfalls bildet der Wellenabschnitt, an welchem der erste Wickelkörper angeordnet ist, einen Teil der Drehwelle. Die Drehwelle kann sich beispielsweise so weit seitlich über eine Vertikale hinauserstrecken, wobei die Vertikale im Bereich eines in vertikaler Richtung sich erstreckenden Seitenrandes des Abdeckelements verläuft, dass in diesem seitlich überstehenden Teil der erste Wickelkörper positionierbar ist bzw. dieser Teil den Wellenabschnitt zur Aufnahme des ersten Wickelkörpers bereitstellt. Die Drehwelle kann aus mehreren fest verbundenen Teilstücken gebildet sein.

Das Zusammenspiel der Drehwelle und des oberen Randes des Abdeckelements kann insbesondere mit einer Seilzugvorrichtung mit wenigstens einer Seiltrommel und einem Zugseil zum Nachführen des oberen Randes nach oben oder unten gestaltet sein. Dabei kann mit dem maximal nach oben gezogenen Abdeckelement die Öffnung in dem Wandabschnitt komplett abgedeckt werden. Dabei ist das Abdeckelement in der Regel vollständig von dem Wickelelement abgewickelt. Beim Absenken des oberen Randes wird gleichzeitig das Abdeckelement aufgewickelt. Das Aufwickeln erfolgt bevorzugt insbesondere in dem Maß, wie der obere Rand abgesenkt wird, so dass sich ein unterer Rand des Abdeckelements zumindest im Wesentlichen nicht nach oben oder unten bewegt. Diese Anordnung stellt ausgehend vom abgedeckten Zustand der Öffnung ein oben öffnendes bzw. ein nach oben schließendes System dar, bezogen auf eine nicht verdeckte Öffnung.

Zur Bewegung des oberen Randes wird mit dem Wickelvorgang der Drehwelle erreicht, dass der freie nicht aufgewickelte Teil des Zugseils zwischen der Seiltrommel und dem oberen Rand des Abdeckelements entsprechend dem Wickelfortschritt in seiner Länge verändert also verlängert oder verkürzt wird, sodass entsprechend mit dem immer gespannten bzw. auf Zug belasteten Zugseil die vertikale Höhenposition des oberen Randes bestimmt bzw. verstellt wird.

Weiter ist es vorteilhaft, dass die Antriebseinheit ortsfest positioniert ist. Somit kann die Antriebseinheit, welche bei größeren Aggregaten ein nicht unerhebliches Gewicht aufweist, nahe der Öffnung und fest und lagesicher beispielsweise an einer Gebäudewand fixiert werden.

Weiter ist gemäß einer vorteilhaften Ausführungsform des Erfindungsgegenstandes die Antriebseinheit derart ausgebildet, dass die Antriebseinheit an einem Wandabschnitt im Bereich einer oberen Begrenzung der abzudeckenden Öffnung anordenbar ist. Insbesondere kann ein angetriebener Ausgangszapfen der Antriebseinheit, zum Beispiel eines Elektromotors, ohne Umlenkmittel die Drehwelle drehbar antreiben, indem die Positionierung der Antriebseinheit so erfolgt, dass der Ausgangszapfen und die Drehwelle zueinander fluchtend miteinander fest verbindbar sind.

Außerdem ist eine Anbringung der Antriebseinheit in einem Bereich der oberen Öffnungsbegrenzung in der Regel dahingehend vorteilhaft, dass ein relevanter Abstand zu einem unteren bodennahen Bereich des Wandabschnitts existiert. Dort herrschen bei einer Aufstellung im Freien häufig für die Anordnung der Antriebseinheit ungünstige Bedingungen, da z. B. im landwirtschaftlichen Bereich dort meist ein erhöhter Verschmutzungsgrad bzw. ein regelmäßiger Kontakt mit Regenwasser oder Schnee zu beobachten ist.

Auch ist es vorteilhaft, dass das Wickelelement im Bereich eines unteren Randes des Abdeckelements angreift. So kann bei einer entsprechenden gegenseitigen Abstimmung der Drehung der Drehwelle und des Wickelelements der untere Rand, der an dem Wickelelement aufgenommen ist, beim Wickelvorgang unabhängig von der Drehrichtung in einer gewünschten vertikalen Position verbleiben, abgesehen von geringen im Praxisbetrieb auftretenden Ausgleichsbewegungen des Wickelelements samt ggf. daran aufgewickeltem Wickel aus aufgewickelten Bereichen des Abdeckelements. Denn das durch das Aufwickeln des unteren Teils des Abdeckelements bedingte Verkürzen des Abdeckelements erfolgt in dem Maß, wie das gesamte Abdeckelement gemäß dem Absenken des oberen Randes abgesenkt wird. Überlagernd bleibt der untere Rand des Abdeckelements beim Absenken des oberen Randes zumindest nahezu auf gleicher vertikaler Höhe. Das Ergebnis ist, bei zuvor komplett geschlossener Öffnung, dass die Öffnung nur von oben geöffnet wird.

Beim gegenläufigen Vorgang mit jeweils Drehrichtungsumkehr der Drehwelle und des Wickelelements, was über eine Kontrolleinheit zur Betriebskontrolle der Antriebseinheit kontrolliert erfolgt, ggf. im Zusammenwirken mit Sensormitteln zur Erfassung von Bewegungs- und/oder Positionsdaten für Komponenten der Wickelvorrichtung, finden die Vorgänge in umgekehrter Weise statt. Demgemäß wird bei vollständig unbedeckter Öffnung bzw. bei auf dem Wickelelement entsprechend aufgewickeltem Abdeckelement, der Abdeckelement-Wickel auf dem Wickelelement abgewickelt, so dass in der Folge die Öffnung von der unteren Begrenzung her, wo das Wickelelement positioniert ist, nach oben mit dem Anheben des oberen Randes flächig abgedeckt wird.

Das Wickelelement ist vorteilhaft in seiner Position mit geringem Spiel festgelegt.

Es ist aber auch eine Variante möglich, bei welcher es von Vorteil ist, dass das Wickelelement entlang eines vorgebbaren Bewegungsweges versetzbar geführt ist z. B. in vertikaler Richtung oder etwas schräg dazu verfahrbar ist. Dieses Szenario ist insbesondere bei einer weiter unten noch erklärten sogenannten Mittenwicklung von Bedeutung bzw. bei einem Wickelvorgang des Abdeckelements, bei welchem das Wickeln des Abdeckelements in einem zum Absenk- oder Anhebweg des oberen Randes anderen Maß erfolgt. So lassen sich zum Beispiel Systeme realisieren, bei denen mit dem Absenken des oberen Randes des Abdeckelements gleichzeitig ein Anheben des unteren Randes des Abdeckelements stattfindet.

Vorteilhaft weisen die Ausgleichmittel eine Teleskopanordnung und/oder eine Gelenkanordnung zwischen dem zweiten Wickelkörper und dem Wickelelement auf. Insbesondere ist es vorteilhaft, wenn eine Teleskopgelenkkupplung vorhanden ist, mit welcher vergleichsweise geringe Relativbewegungen zwischen dem zweiten Wickelkörper und dem Wickelelement tolerierbar sind, wobei deren Drehkopplung nicht beeinträchtigt ist.

Eine vorteilhafte Modifikation des Erfindungsgegenstandes zeichnet sich dadurch aus, dass der zweite Wickelkörper schwimmend gelagert ist. Insbesondere ist es vorteilhaft, dass der zweite Wickelkörper nur geringfügig vertikal versetzbar ist, beispielsweise im Millimeterbereich. Gegebenenfalls kann der zweite Wickelkörper starr gemeinsam drehend mit dem Wickelelement verbunden sein.

Des Weiteren ist es vorteilhaft, dass eine auf den zweiten Wickelkörper wirkende Gegenzuganordnung vorgesehen ist, mit welcher eine vorgebbare Kraft bereitstellbar ist, um beim Anheben des oberen Randes des Abdeckelements das Wickelelement kontrollierbar zu bewegen. Die Gegenzuganordnung ist sowohl für das Anheben des oberen Randes des Abdeckelementes mit dem gleichzeitigen Abwickeln des aufgewickelten Teils des Abdeckelementes vorteilhaft, als auch für den umgekehrten Vorgang. Mit der Gegenzuganordnung kann eine gleichmäßige Bewegung des Abdeckelements bzw. des oberen Randes des Abdeckelements nach unten erfolgen. Beim Anheben des oberen Randes des Abdeckelementes kann das Wickelelement bzw. das Abdeckelement vorteilhaft insbesondere nicht unkontrolliert bzw. in einem zu großen Maß nach oben gezogen werden. Die Gegenzuganordnung kann beispielsweise eine Seilzuganordnung mit einem Gegenzugwickelkörper umfassen, der entsprechend des zweiten Wickelkörpers gemeinsam dreht, wobei ein Ende des Seilzugs an dem Gegenzugwickelkörper angreift und am Gegenzugwickelkörper abhängig von der Drehbewegung des zweiten Wickelkörper auf- und abwickelbar ist wobei ein zweites Ende des Seilzuges gespannt an einem Festpunkt fixiert ist.

Eine mögliche Alternative zur Gegenzuganordnung zum Beispiel mit einem angehängten Gewicht, das z. B. auf das Wickelelement dauerhaft wirkt, muss mit einem vergleichsweise hohen Gewicht ausgestattet werden, was man in der Praxis in der Regel vermeiden möchte.

Des Weiteren ist es auch vorteilhaft, dass für ein definiertes Zusammenwirken der Bewegung des oberen Randes mit dem Wickelvorgang des Wickelelements der Wickeldurchmesser an der Drehwelle für die Zugmittel, der Wickeldurchmesser für das Zugelement und der Wickeldurchmesser der Drehwelle aufeinander abgestimmt gewählt sind. Auch ist es vorteilhaft, dass zusätzlich der Wickeldurchmesser des Gegenzugwickelkörpers entsprechend abgestimmt ist. Insbesondere ist es vorteilhaft, dass bei einer Einfachwicklung mit einem positionsfesten zweiten Wickelkörper alle Wickeldurchmesser vergleichbar insbesondere identisch sind.

Bei einer Mittenwicklung, mit einem gemäß der Bewegungsrichtung des oberen Randes bewegbaren Wickelelement, sind die Wickeldurchmesser an der Drehwelle für die Zugmittel und der Wickeldurchmesser des zweiten Wickelkörpers jeweils gleich und doppelt so groß, wie die jeweiligen Wickeldurchmesser des ersten Wickelkörpers und des Wickelelements. Der Wickeldurchmesser eines ggf. vorhandenen Gegenzugwickelkörpers ist ebenfalls in der Größenordnung des ersten Wickelkörpers.

Ein Vorteil der erfindungsgemäßen Wickelvorrichtung besteht darin, dass der Antriebsmotor oben fest verbunden mit der oben liegenden Drehwelle angeordnet werden kann. Damit spart man Einbauraum. Man benötigt z. B. immer nur ein vergleichsweise kleines Miniteleskop, um einen geringen Laufunterschied zwischen Abdeckelement und dem Zugelement auszugleichen. Ein kleines Miniteleskop ist wirtschaftlich vorteilhaft.

Das ganze System ist vergleichsweise tolerant gegenüber Störungen von außen, welche den Wickelprozess beeinflussen. Insbesondere weil die Verbindung des Antriebsmotors zu insbesondere dem zweiten Wickelkörpers bei dessen Aufnahme an einem Schiebeelement über das Zugelement nicht mit mechanisch ineinandergreifenden Getriebekonturen wie z. B. bei Zahngetrieben gelöst ist, sondern eine gewisse Bewegungsflexibilität zulässt, was bei laufender Antriebseinheit als auch bei stehender Antriebseinheit vorteilhaft ist.

Beim erfindungsgemäßen System ist es vorteilhaft, dass das Schiebeelement bzw. der Schlitten mit dem zweiten Wickelkörper ein vergleichsweise geringes Gewicht aufweist. Insbesondere muss kein Antriebsmotor am Schlitten aufgenommen und mitgeführt werden.

Beim Hochziehen des oberen Randes des Abdeckelements erfolgt ein wesentlicher Beitrag zur Drehmomentübertragung dadurch, dass mit dem Abwickeln des Wickelelements beim Hochziehen des Abdeckelements über Ausgleichmittel wie z. B. ein Miniteleskop eine Drehübertragung auf den zweiten Wickelkörper an dem Schiebeelement erfolgt.

### Figurenbeschreibung

Weitere Merkmale und Vorteile der Erfindung sind anhand der in den Figuren dargestellten Ausführungsbeispiele näher erläutert.

Im Einzelnen zeigt:
- Figur 1: eine perspektivische Teilansicht schräg von oben auf eine Anordnung an einem Wandelement,
- Figur 2: eine erfindungsgemäße Anordnung gemäß der Ansicht von Figur 1 an einem Wandelement,

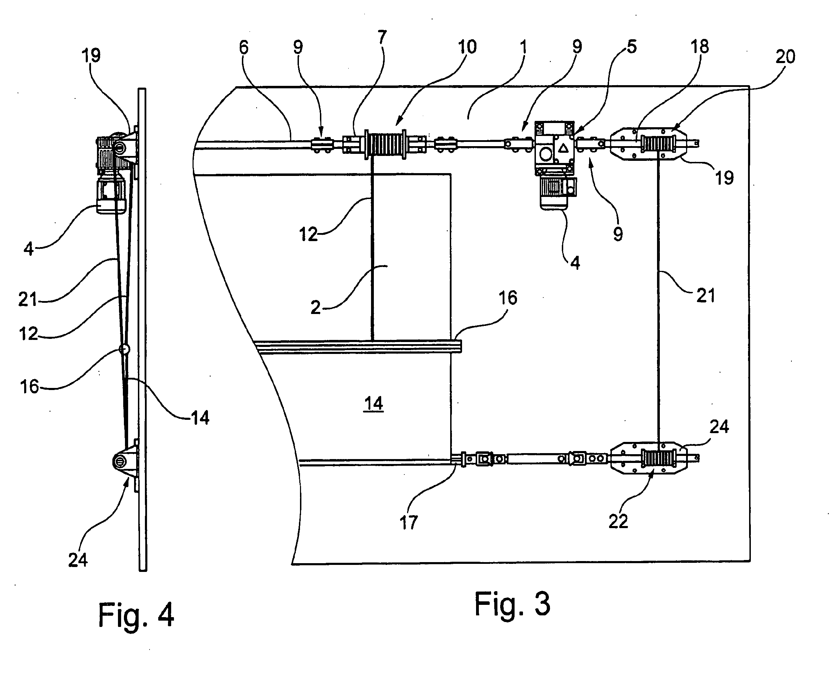

- Figur 3: einen Ausschnitt der Anordnung gemäß Figur 1 von vorne,
- Figur 4: die Anordnung gemäß Figur 3 in Seitenansicht,

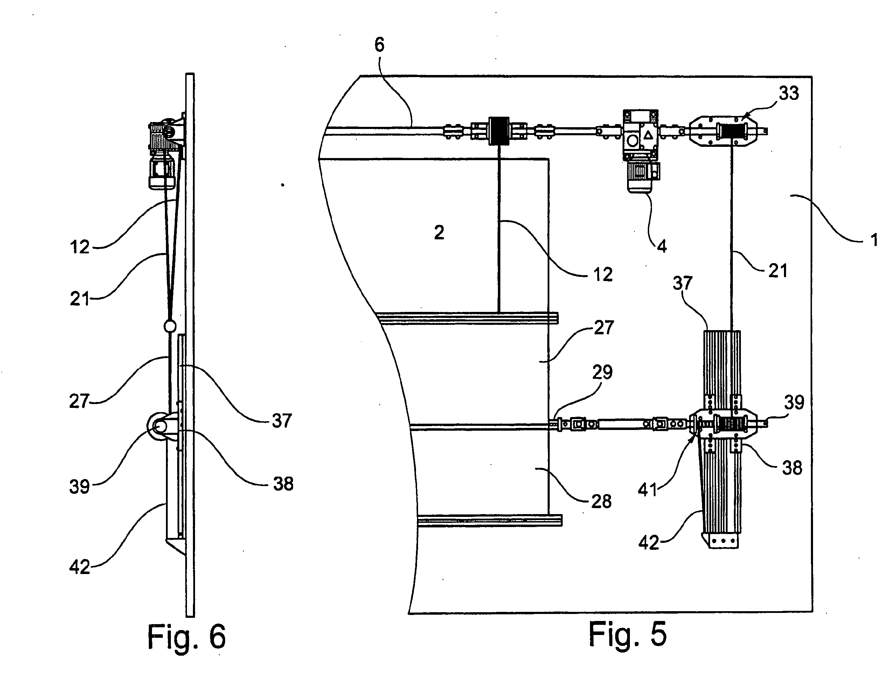

- Figur 5: einen Ausschnitt der Anordnung gemäß Figur 2 von vorne und
- Figur 6: die Anordnung gemäß Figur 5 in Seitenansicht.

In den Figuren sind für sich entsprechende Elemente der beiden Ausführungsbeispiele teilweise die gleichen Bezugszeichen verwendet.

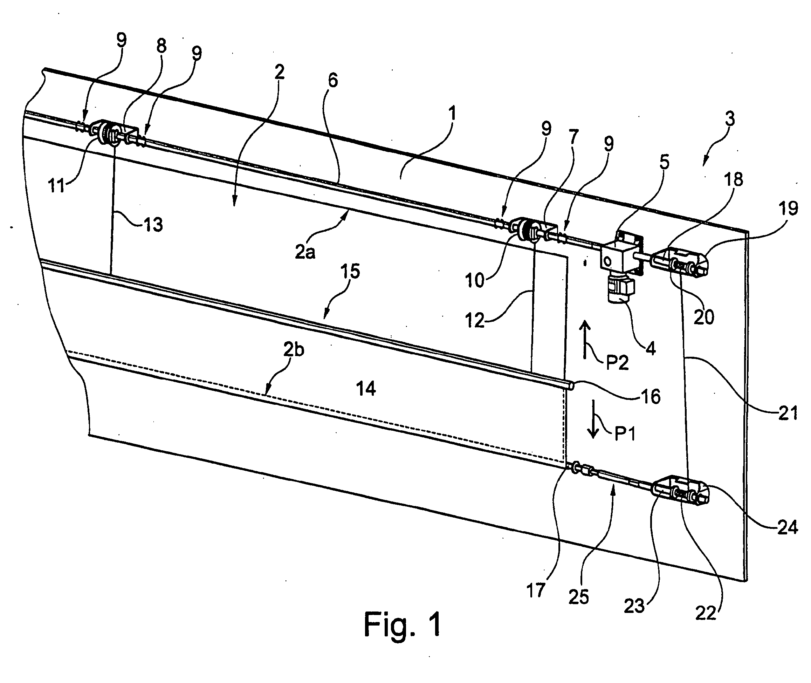

Figur 1 zeigt eine Gebäudewand 1 in vertikaler Ausrichtung mit einer Gebäudeöffnung 2, hier rechteckförmig, wobei die Öffnung 2 samt einer erfindungsgemäßen Wickelvorrichtung 3 nur teilweise dargestellt ist. Die Wickelvorrichtung 3 kann beispielsweise zur zeitweise bzw. teilweisen Abdeckung der Gebäudeöffnung 2 in der Gebäudewand 1 an einem Stallungsgebäude oder einem Gewächshaus dienen.

Zur Abdeckung der Gebäudeöffnung 2 ist die Wickelvorrichtung 3 außen an der Gebäudewand 1 vorhanden. Die Wickelvorrichtung 3 bzw. die Wickeljalousie umfasst einen fest positionierten Antriebsmotor 4, hier zum Beispiel einen elektrisch betriebenen Motor. Über ein Getriebe 5 treibt der Antriebsmotor 4 eine Drehwelle 6 wahlweise in zwei entgegengesetzte Drehrichtungen an. Die Drehwelle 6 ist etwas oberhalb eines oberen Randes 2a der Gebäudeöffnung 2 in etwa parallel zum Rand 2a bzw. horizontal ausgerichtet an der Gebäudewand 1 über entsprechende Lagerschellen 7, 8 fest aufgenommen, aber drehbar. Die Lagerschellen 7 und 8 sind beispielsweise in etwa U-förmige Blechelemente mit nach vorne senkrecht zur Gebäudewand 1 abstehenden Aufnahmelaschen mit Öffnungen zum Durchgreifen der Drehwelle 6. Die Drehwelle 6 ist beispielsweise über Verbindungselemente 9 aus einzelnen Teilstücken zusammengesetzt, wobei über die Verbindungselemente 9 die einzelnen Teilstücke der Drehwelle 6 drehfest miteinander verbunden sind.

An der Drehwelle 6 sind hier beispielhaft zwei Wickeltrommeln 10, 11 fest aufgenommen, sodass bei einer Drehung der Drehwelle 6 auch die Wickeltrommeln 10, 11 entsprechend mitdrehen. Die Wickeltrommeln 10, 11 sind hier im Bereich der Lagerschellen 7 und 8 zwischen den vorstehenden Aufnahmelaschen positioniert. Auf den Wickeltrommeln 10 und 11 ist jeweils gleichartig ein Zugseil 12 bzw. ein Zugseil 13 auf- bzw. abwickelbar aufgenommen. Demgemäß ist ein Ende des Zugseils 12 an der Wickeltrommel 10 bzw. ein Ende des Zugseils 13 an der Wickeltrommel 11 aufgenommen und bei durch ein Abdeckelement 14 geschlossenen Gebäudeöffnung 2 aufgewickelt auf die dazugehörige Wickeltrommel 10 bzw. 11.

Figur 1 zeigt das Abdeckelement 14 in etwa bei vom oben halb geöffneter Gebäudeöffnung 2, sodass ein unterer Bereich der Gebäudeöffnung 2 von einem Teil des Abdeckelements 14 abgedeckt ist, insbesondere mit geringem Abstand vor der Gebäudewand 1.

Ein oberer Rand 15 des Abdeckelementes 14 ist hier mit einem durchgehenden steifen Profil 16 ausgebildet, an welchem über die gesamte Breite des Abdeckelements 14 dieses am Profil 16 angreift. Der obere Rand 15 bzw. das Profil 16 sind demgemäß derart über die Zugseile 12, 13 gehalten, dass der obere Rand 15 bzw. das Profil 16 zumindest nahezu parallel zum oberen Rand 2a der Gebäudeöffnung 2 bzw. zur Drehwelle 6 ausgerichtet ist.

Bei der in Figur 1 dargestellten teilweise vom Abdeckelement 14 nicht bedeckten Gebäudeöffnung 2 ist ein Teil der Zugseile 12 und 13 noch aufgewickelt auf den dazugehörigen Wickeltrommeln 10 und 11, sodass bei entsprechender Drehung der Drehwelle 6 angetrieben über den Antriebsmotor 4 eine weitere Zugseillänge abgewickelt wird und damit der obere Rand 15 mit dem daran angebrachten Abdeckelement 14 nach unten gemäß Pfeil P1 absenkbar ist. Wird durch den Antriebsmotor 4 die Drehwelle 6 in umgekehrter Richtung drehangetrieben, erfolgt ein Aufwickeln der Zugseile 12, 13 über die Wickeltrommeln 10, 11, sodass das Abdeckelement 14 bzw. der Rand 15 nach oben gemäß Pfeil P2 angehoben wird und damit die Gebäudeöffnung 2 geschlossen werden kann.

Damit das Abdeckelement 14 mit seinem unteren Rand, welcher nicht ersichtlich ist und welcher an einer Wickelwelle 17 über seine komplette Breite aufgenommen ist, sich beim Absenken des oberen Rands 15 nicht ebenfalls absenkt, wird die Wickelwelle 17 entsprechend in eine Richtung drehangetrieben, so dass sich das Abdeckelement 14 mit seinem unteren Rand an der Wickelwelle 17 aufwickelt entsprechend dem Maß der Strecke, über welche sich der obere Rand 15 gemäß Pfeil P1 nach unten absenkt.

Die Wickelwelle 17 wird ebenfalls über den Antriebsmotor 4 drehangetrieben in beide unterschiedlichen Drehrichtungen. Dies erfolgt aber mit unterschiedlichen Wirkmechanismen.

Des Weiteren ist ein Wellenabschnitt 18 vorgesehen, welcher fluchtend mit der Drehwelle 6 ausgebildet ist und über eine weitere Lagerschelle 19 an der Gebäudewand 1 drehbar aber fest positioniert aufgenommen ist. Am Wellenabschnitt 18 ist ein erster Wickelkörper 20 aufgenommen, welcher im Durchmesser entsprechend den Wickeltrommeln 10, 11 ausgebildet ist. Am Wickelkörper 20 greift ein Zugelement 21 an, welches durch angetriebene Drehung des Wickelkörpers 20 auf- und abwickelbar ist. Hierfür ist ein erstes Ende des Zugelements 21 am Wickelkörper 20 fixiert. Das andere untere Ende des Zugelements 21 ist an einem unteren bzw. zweiten Wickelkörper 22 fixiert, sodass bei der dargestellten gespannten Anordnung des Zugelements 21 zwischen den Wickelkörpern 20 und 22 eine entsprechende Drehung des Wickelkörpers 20 ein Aufwickeln des Zugelements 21 auf den ersten Wickelkörper 20 und damit ein Abwickeln eines Teils des Zugelements 21 am Wickelkörper 22 bedingt, wobei der Wickelkörper 22 in Drehung versetzt wird. Dies geschieht gekoppelt mit dem Absenken des oberen Randes 15. Der Wickelkörper 22 ist an einem Wellenabschnitt 23 fest und gemeinsam mit dem Wellenabschnitt 23 drehend aufgenommen, wobei der Wellenabschnitt 23 drehbar in einer Lagerschelle 24, welche fest fixiert außen an der Gebäudewand 1 vorhanden ist, aufgenommen ist. Der Wellenabschnitt 23 ist über einen Verbindungsabschnitt 25 drehgekoppelt mit der Wickelwelle 17. Insbesondere ist der Wellenabschnitt 23 mit dem Wickelkörper 22 seitlich versetzt im Bereich positioniert, in welchem ein unterer Rand 2b der Gebäudeöffnung 2 vorhanden ist. Insbesondere ist der Wellenabschnitt 23 parallel ausgerichtet zum Wellenabschnitt 18 bzw. zur Drehwelle 6.

Zum Ausgleich geringer Positionsunterschiede der Wickelwelle 17 gegenüber dem Wellenabschnitt 23 ist der Verbindungsabschnitt 25 derart ausgebildet, dass eine Versatzbewegung der Wickelwelle 17 insbesondere in Richtung P1 oder P2 bzw. senkrecht dazu in Richtung weg oder hin zur Gebäudewand 1 möglich ist. Der Verbindungsabschnitt 25 ist hier beispielsweise vorteilhafterweise als Miniteleskop bzw. als Teleskopgelenkanordnung ausgestaltet.

Dieses umfasst einen beidseitig z. B. gelenkig aufgenommenen mittleren Abschnitt der beidseitig über Gelenkabschnitte auslenkbar am Wellenabschnitt 23 einerseits und der Wickelwelle17 andererseits gelagert ist.

Im Betrieb ist es jedoch so, dass die Durchmesser der Wickeltrommeln 7, 8 bzw. der Wickelkörper 20 und 22 derart aufeinander gleichartig im Durchmesser abgestimmt sind, dass die Wickelwelle 17 im Wesentlichen in ihrer Position in vertikaler Richtung zumindest verbleibt, sodass der untere Rand 2b der Gebäudeöffnung 2 immer durch einen Teil des Abdeckelements 14 verdeckt bleibt, sodass lediglich der obere Rand 15 durch dessen Bewegung in Richtung P1 oder P2 versetzbar ist und damit die Gebäudeöffnung 2 von oben geöffnet bzw. nach oben geschlossen wird.

Wird nun beispielsweise aus der in Figur 1 dargestellten Situation bei etwa halb geöffneter bzw. geschlossener Gebäudeöffnung 2 der obere Rand 15 durch Aufwickeln der Zugseile 12 und 13 auf die Wickeltrommeln 10 und 11 nach oben bewegt, wird die Gebäudeöffnung 2 geschlossen. Dabei dreht die Antriebseinheit 4 gleichzeitig den Wickelkörper 20 derart, dass das auf dem ersten Wickelkörper 20 aufgewickelte Zugseil 21 davon abgewickelt wird.

Ein entsprechender Teil des Zugseils 21 wird gleichzeitig auf den zweiten Wickelkörper 22 aufgewickelt, so dass das Zugseil 21 immer gespannt bleibt bzw. wieder vorgespannt wird. Die Drehung des zweiten Wickelkörpers 22 wird dadurch erzeugt, dass beim Hochziehen des Abdeckelementes 14, was mit dem Bewegen des oberen Randes 15 nach oben erfolgt, schwerkraftbedingt der aufgewickelte Teil des Abdeckelements 14 sich von der Wickelwelle 17 abwickelt, womit eine Drehung der Wickelwelle 17 stattfindet. Dies erfolgt in dem Maß, wie der obere Rand 15 sich nach oben bewegt, sodass insgesamt die Wickelwelle 17 zumindest nahezu in ihrer vertikalen Position verbleibt und die Gebäudeöffnung 2 vom oberen Rand 15 bis zum unteren Rand 2b durch das Abdeckelement 14 bedeckt bleibt, wobei die Wickelwelle 17 im Wesentlichen parallel zum unteren Rand 2b verläuft. Mit der Drehung der Wickelwelle 17 wird durch den Verbindungsabschnitt 25 auch der zweite Wickelkörper 22 gedreht, so dass das Zugseil 21 auf den Wickelkörper 22 aufgewickelt wird und zwar entsprechend der von dem Wickelkörper 20 abgewickelten Zugseillänge.

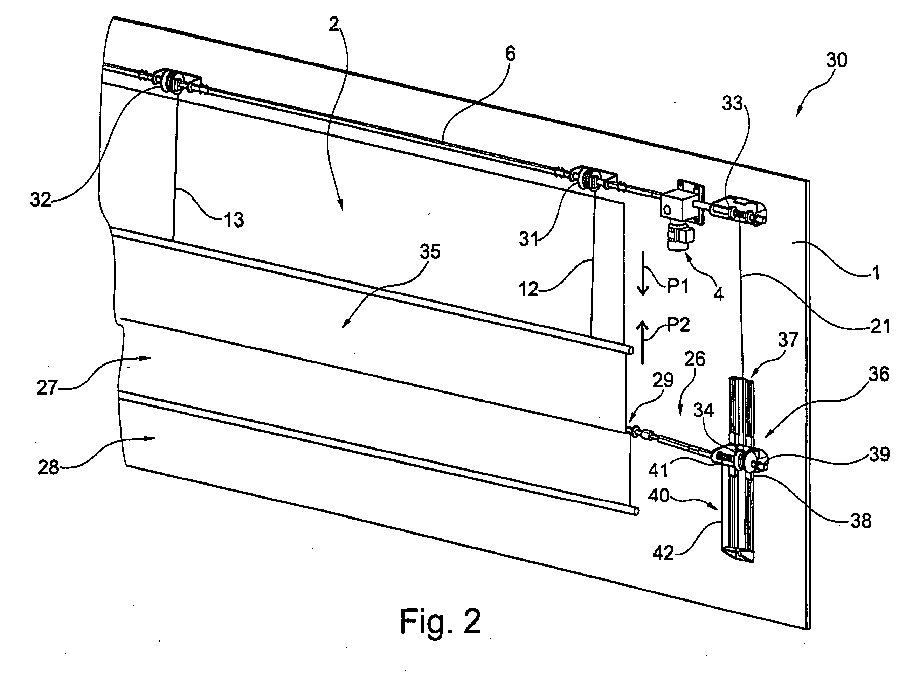

Eine Anordnung mit gleicher Ausrichtung wie Figur 1 zeigt Figur 2.

Hier ist eine Mittenwicklung 26 realisiert, mit welcher das Abdeckelement 35 über einen oberen und unteren Teilbereich 27, 28 des Abdeckelements 35 aufwickelbar ist. Da bei der Mittenwicklung 26 eine Wickelwelle 29 gleichzeitig den oberen Teilbereich 27 und dem unteren Teilbereich 28 aufwickelt bzw. gleichzeitig die beiden Teilbereiche 27, 28, welche auf der Wickelwelle 29 bereits aufgewickelt sind, abwickelt, sind die entsprechenden Durchmesser bzw. damit Umfänge von Wickelabschnitten der Anordnung gemäß der Wickelvorrichtung 30 aus Figur 2 angepasst. Hierfür sind die an der Drehwelle 6 vorhandene Wickeltrommeln 31, 32 mit einem doppelten Durchmesser zu einem Wickelkörper 33 ausgebildet und der weitere unten positionierte Wickelkörper 34 weist den Durchmesser der Wickeltrommeln 31, 32 auf. Ansonsten sind die Dimensionierungen der Anordnung gemäß der Wickelvorrichtung 30 zur Anordnung gemäß der Wickelvorrichtung 3 vergleichbar bzw. identisch.

Pro Umdrehung der Wickelwelle 29 wird damit im Vergleich zu einer Umdrehung der Wickelwelle 17 gemäß Figur 1 in der Wickelvorrichtung 30 eine doppelte Höhe des Abdeckelements 35 realisiert. Für eine vertikale Nachführbewegung des Wickelkörpers 34 beim Auf- bzw. Abwickeln des Abdeckelements 35 ist eine Schienenanordnung 36 ausgebildet. Die Schienenanordnung 36 umfasst eine mit vertikalen Führungskonturen versehene Führungsschiene 37 mit einem daran vertikal verfahrbaren Führungsschlitten 38. Am Führungsschlitten 38 ist ein Wellenabschnitt 39 drehbar aufgenommen, wobei mit dem Wellenabschnitt 39 fest verbunden der Wickelkörper 34 drehbar ist. Ansonsten erfolgt die Zusammenwirkung des Wellenabschnitts 39 mit der Wickelwelle 29 auf die Weise gemäß der Anordnung aus Figur 1. Für eine Gegenlagerung des Führungsschlittens 38 kann ein Gewicht an den Führungsschlitten 38 angehängt sein. In Figur 2 ist stattdessen eine Anordnung mit einer nach unten fixierten Zugseilanordnung 40 ausgebildet. Die Zugseilanordnung 40 umfasst einen weiteren Wickelkörper 41 mit einem daran auf- bzw. abwickelbaren Seil 42, welches mit dem anderen Ende am unteren Abschnitt der Führungsschiene 37 fixiert ist. Die Zugseilanordnung 40 hat insbesondere nichts mit einer Drehmomentübertragung auf die Wickelwelle 29 bzw. den Wickelkörper 34 zu tun.

Der Durchmesser des Wickelkörpers 41 ist identisch mit dem Durchmesser des Wickelkörpers 33.

So wird erreicht, dass immer eine gewisse Zugkraft auf den Wellenabschnitt 39 aufbringbar ist bzw. die Wickelwelle 29 beim Schließen der Gebäudeöffnung 2 nicht nach oben in Richtung P2 gezogen wird.

### Bezugszeichenliste:

- 1: Gebäudewand
- 2: Gebäudeöffnung
- 2a: Rand
- 2b: Rand
- 3: Wickelvorrichtung
- 4: Antriebsmotor
- 5: Getriebe
- 6: Drehwelle
- 7: Lagerschelle
- 8: Lagerschelle
- 9: Verbindungselement
- 10: Wickeltrommel
- 11: Wickeltrommel
- 12: Zugseil
- 13: Zugseil
- 14: Abdeckelement
- 15: Rand
- 16: Profil
- 17: Wickelwelle
- 18: Wellenabschnitt
- 19: Lagerschelle
- 20: Wickelkörper
- 21: Zugelement
- 22: Wickelkörper
- 23: Wellenabschnitt
- 24: Lagerschelle
- 25: Verbindungsabschnitt
- 26: Mittenwicklung
- 27: Teilbereich
- 28: Teilbereich
- 29: Wickelwelle
- 30: Wickelvorrichtung
- 31: Wickeltrommel
- 32: Wickeltrommel
- 33: Wickelkörper
- 34: Wickelkörper
- 35: Abdeckelement
- 36: Schienenanordnung
- 37: Führungsschiene
- 38: Führungsschlitten
- 39: Wellenabschnitt
- 40: Zugseilanordnung
- 41: Wickelkörper
- 42: Seil

## Patentansprüche

1. Wickelvorrichtung (30) zur Abdeckung einer Öffnung (2), insbesondere in einem im Wesentlichen vertikalen Wandabschnitt (1), umfassend ein flächiges, flexibles Abdeckelement (35) zur mindestens teilweisen Abdeckung der Öffnung (2), ein mit einer Antriebseinheit (4) drehbares und am Abdeckelement (35) angreifendes längliches Wickelelement (29), mit dem abhängig von der Drehrichtung des Wickelelements (29) das Abdeckelement (35) auf das Wickelelement (29) aufwickelbar und von diesem wieder abwickelbar ist, wobei eine Verstelleinheit vorhanden ist, welche während des Wickelvorgangs einen bewegbaren oberen Rand des Abdeckelements (35) absenkt oder anhebt, ohne einen Wickelvorgang des bewegbaren oberen Randes, wobei Übertragungsmittel für ein Zusammenwirken der Antriebseinheit (4) und des Wickelelements (29) vorgesehen sind, mit einem wickelbaren Zugelement (21), das zwischen einem ersten drehbaren Wickelkörper (33) und einem zweiten drehbaren Wickelkörper (34) derart aufgenommen ist, dass das Zugelement (21) mit dem ersten von der Antriebseinheit (4) antreibbaren Wickelkörper (33) auf- und abwickelbar ist, wobei der zweite Wickelkörper (34) und das Wickelelement (29) miteinander drehgekoppelt sind und wobei mit einem Abwickelvorgang des Zugelements (21) vom zweiten Wickelkörper (34) das Abdeckelement (35) aufwickelbar ist, wobei genau eine Antriebseinheit (4) vorgesehen ist, **dadurch gekennzeichnet, dass** das Wickelelement (29) zum Einstellen der Abdeckfläche derart am Abdeckelement (35) angeordnet ist, dass zwei beidseitig des Wickelelements (29) angeordnete Teilbereiche (27, 28) des Abdeckelements (35) gleichzeitig auf das bzw. von dem Wickelelement (29) auf- bzw. abwickelbar sind, und Ausgleichmittel derart vorhanden sind, dass das Wickelelement (29) quer zu einer Längsachse des Wickelelements (29) verschiedene Positionen einnehmen kann und ein verfahrbares Schiebeelement aufweisen, mit welchen der zweite Wickelkörper (34) entlang eines vorgebbaren Weges nachführbar ist, während sich der bewegbare obere Rand des Abdeckelements (35) absenkt oder anhebt, wobei ein Aufwickeln des Abdeckelements (35) in dem Maß erfolgen Kann, wie der obere Rand abgesenkt wird, so dass sich ein unterer Rand des Abdeckelements (35) zumindest im Wesentlichen nicht nach oben oder unten bewegt.

2. Wickelvorrichtung nach Anspruch 1, **dadurch gekennzeichnet, dass** der erste Wickelkörper (33) von der Antriebseinheit (4) drehbar antreibbar ist.

3. Wickelvorrichtung nach Anspruch 1 oder Anspruch 2, **dadurch gekennzeichnet, dass** eine fest positionierte Drehwelle (6) vorgesehen ist, welche von der Antriebseinheit (4) drehbar antreibbar ist, wobei der bewegbare obere Rand des Abdeckelements (35) abhängig von der Drehrichtung der Drehwelle (6) absenkbar oder anhebbar ist.

4. Wickelvorrichtung nach einem der vorhergehenden Ansprüche, **dadurch gekennzeichnet, dass** am bewegbaren oberen Rand des Abdeckelements (35) ein wickelbares Zugmittel (12, 13) angreift, welches derart antreibbar auf- und abwickelbar ist, dass der bewegbare obere Rand (15) des Abdeckelements (35) abhängig vom Wickelfortschritt anhebbar und absenkbar ist.

5. Wickelvorrichtung nach Anspruch 4, **dadurch gekennzeichnet, dass** das wickelbare Zugmittel (12, 13) mittels der Drehwelle (6) auf- und abwickelbar ist.

6. Wickelvorrichtung nach einem der vorhergehenden Ansprüche, **dadurch gekennzeichnet, dass** die Antriebseinheit (4) ortsfest positioniert ist.

7. Wickelvorrichtung nach einem der vorhergehenden Ansprüche, **dadurch gekennzeichnet, dass** die Antriebseinheit (4) derart ausgebildet ist, dass die Antriebseinheit (4) an dem Wandabschnitt (1) im Bereich einer oberen Begrenzung (2a) der abzudeckenden Öffnung (2) anordenbar ist.

8. Wickelvorrichtung nach einem der vorhergehenden Ansprüche, **dadurch gekennzeichnet, dass** das Wickelelement (29) im Bereich eines unteren Randes des Abdeckelements (35) angreift.

9. Wickelvorrichtung nach einem der vorhergehenden Ansprüche, **dadurch gekennzeichnet, dass** die Ausgleichmittel eine Teleskopanordnung und/oder eine Gelenkanordnung zwischen dem zweiten Wickelkörper (34) und dem Wickelelement (29) aufweisen.

10. Wickelvorrichtung nach einem der vorhergehenden Ansprüche, **dadurch gekennzeichnet, dass** der zweite Wickelkörper (34) schwimmend gelagert ist.

11. Wickelvorrichtung nach einem der vorhergehenden Ansprüche, **dadurch gekennzeichnet, dass** eine auf den zweiten Wickelkörper (34) wirkende Gegenzuganordnung (40) vorgesehen ist, mit welcher eine vorgebbare Kraft auf die Ausgleichmittel aufbringbar ist, um beim Anheben und beim Absenken des oberen Randes des Abdeckelements (35) das Wickelelement (29) kontrollierbar zu bewegen.

## Claims

1. Winding device (30) for covering an opening (2), in particular in an essentially vertical wall section (1), comprising a flat, flexible cover element (35) for the at least partial covering of the opening (2), an elongated winding element (29) that is rotatable by means of a drive unit (4) and cooperates with the cover element (35), by means of which depending on the direction of rotation of the winding element (29) the cover element (35) can be wound onto the winding element (29) and can be unwound again from the latter, an adjusting unit being provided which during the winding operation lowers or raises a movable upper edge of the cover element (35) without a winding operation of the movable upper edge, transmitting means being provided for interaction between the drive unit (4) and the winding element (29), with a windable pulling element (21) which is mounted between a first rotatable winding body (33) and a second rotatable winding body (34) in such a manner that the pulling element (21) can be wound and unwound by means of the first winding body (33) driveable by the drive unit (4), wherein the second winding body (34) and the winding element (29) are rotatably coupled together, and wherein the cover element (35) can be wound by means of an unwinding operation of the pulling element (21) from the second winding body (34), wherein exactly one drive unit (4) is provided, **characterised in that** the winding element (29) for adjusting the cover surface is arranged on the cover element (35) such that two part areas (27, 28) of the cover element (35) arranged on both sides of the winding element (29) can be wound or unwound at the same time onto or from the winding element (29) and compensating means are provided such that the winding element (29) can assume different positions transverse to a longitudinal axis of the winding element (29) and comprises a drivable sliding element, by means of which the second winding body (34) can be guided along a predefinable path, whereas the movable upper edge of the cover element (35) is lowered or raised, wherein the cover element (35) can be wound to the extent that the upper edge is lowered so that a lower edge of the cover element (35) does not move up or down, at least substantially.

2. Winding device according to claim 1, **characterised in that** the first winding body (33) can be driven rotatably by the drive unit (4).

3. Winding device according to claim 1 or claim 2, **characterised in that** a fixed rotary shaft (6) is provided which can be driven rotatably by the drive unit (4), wherein the movable upper edge of the cover element (35) can be lowered or raised according to the direction of rotation of the rotary shaft (6).

4. Winding device according to any one of the preceding claims, **characterised in that** on the movable upper edge of the cover element (35) a windable pulling means (12, 13) engages, which is drivably windable and unwindable in such a manner that the movable upper edge (15) of the cover element (35) can be raised and lowered depending on the direction of rotation.

5. Winding device according to claim 4, **characterised in that** the windable pulling means (12, 13) can be wound and unwound by means of the rotary shaft (6).

6. Winding device according to any one of the preceding claims, **characterised in that** the drive unit (4) is positioned in a fixed manner.

7. Winding device according to any one of the preceding claims, **characterised in that** the drive unit (4) is configured such that the drive unit (4) can be arranged on the wall section (1) in the region of an upper boundary (2a) of the opening (2) to be covered.

8. Winding device according to any one of the preceding claims, **characterised in that** the winding element (29) engages in the region of a lower edge of the cover element (35).

9. Winding device according to any one of the preceding claims, **characterised in that** the compensating means have a telescopic arrangement and/or an articulated arrangement between the second winding body (34) and the winding element (29).

10. Winding device according to any one of the preceding claims, **characterised in that** the second winding body (34) is mounted in a floating manner.

11. Winding device according to any one of the preceding claims, **characterised in that** a back-pull arrangement (40) acting on the second winding body (34) is provided by means of which a predeterminable force can be applied to the compensating means, in order to move the winding element (29) in a controllable manner when raising and lowering the upper edge of the cover element (35).

## Revendications

1. Dispositif d'enroulement (30) pour recouvrir une ouverture (2), en particulier dans une partie de paroi (1) sensiblement verticale, comprenant un élément de recouvrement (35) flexible et plan destiné à recouvrir au moins en partie l'ouverture (2), un élément d'enroulement (29) allongé pouvant être entraîné en rotation au moyen d'une unité d'entraînement (4) et agissant sur l'élément de recouvrement (35), avec lequel l'élément de recouvrement (35) peut être enroulé sur l'élément d'enroulement (29) et déroulé de celui-ci en fonction du sens de rotation de l'élément d'enroulement (29), une unité de réglage étant présente, laquelle abaisse ou soulève un bord supérieur mobile de l'élément de recouvrement (35) durant la procédure d'enroulement, sans procédure d'enroulement du bord supérieur mobile, des moyens de transmission étant prévus pour faire coopérer l'unité d'entraînement (4) et l'élément d'enroulement (29), avec un élément de traction (21) pouvant être enroulé, lequel est reçu entre un premier corps d'enroulement rotatif (33) et un second corps d'enroulement rotatif (34) de telle manière que l'élément de traction (21) peut être enroulé et déroulé avec le premier corps d'enroulement (33) pouvant être entraîné par l'unité d'entraînement (4), le second corps d'enroulement (34) et l'élément d'enroulement (29) étant couplés en rotation l'un avec l'autre, et l'élément de recouvrement (35) pouvant être enroulé par une opération de déroulement de l'élément de traction (21) du second corps d'enroulement (34), exactement une unité d'entraînement (4) étant prévue, **caractérisé en ce que** l'élément d'enroulement (29), pour le réglage de la surface de recouvrement, est disposé sur l'élément de recouvrement (35) de telle manière que deux parties (27, 28) de l'élément de recouvrement (35) disposées de part et d'autre de l'élément d'enroulement (29) peuvent être simultanément enroulées sur l'élément d'enroulement (29) ou déroulées dudit élément, et des moyens de compensation étant présents de telle manière que l'élément d'enroulement (29) peut occuper transversalement à un axe longitudinal de l'élément d'enroulement (29) différentes positions, lesdits moyens de compensation comprenant un élément coulissant mobile avec lequel le second corps d'enroulement (34) est asservi le long d'une course pouvant être prédéfinie, tandis que le bord supérieur mobile de l'élément de recouvrement (35) s'abaisse ou se soulève, un enroulement de l'élément de recouvrement (35) pouvant être réalisé à mesure que le bord supérieur est abaissé, de sorte qu'un bord inférieur de l'élément de recouvrement (35) ne se déplace pas au moins sensiblement vers le haut ou vers le bas.

2. Dispositif d'enroulement selon la revendication 1, **caractérisé en ce que** le premier corps d'enroulement (33) peut être entraîné en rotation par l'unité d'entraînement (4).

3. Dispositif d'enroulement selon la revendication 1 ou la revendication 2, **caractérisé en ce qu'**il est prévu un arbre rotatif (6) positionné fixement et qui peut être entraîné en rotation par l'unité d'entraînement (4), le bord supérieur mobile de l'élément de recouvrement (35) pouvant être abaissé ou soulevé en fonction du sens de rotation de l'arbre rotatif (6).

4. Dispositif d'enroulement selon l'une des revendications précédentes, **caractérisé en ce qu'**un moyen de traction (12, 13) pouvant être enroulé agit sur le bord supérieur mobile de l'élément de recouvrement (35), lequel moyen de traction peut être enroulé et déroulé par entraînement de telle manière que le bord supérieur mobile (15) de l'élément de recouvrement (35) peut être soulevé et abaissé en fonction de la progression de l'enroulement.

5. Dispositif d'enroulement selon la revendication 4, **caractérisé en ce que** le moyen de traction (12, 13) pouvant être enroulé peut être enroulé et déroulé au moyen de l'arbre rotatif (6).

6. Dispositif d'enroulement selon l'une des revendications précédentes, **caractérisé en ce que** l'unité d'entraînement (4) est positionnée à demeure.

7. Dispositif d'enroulement selon l'une des revendications précédentes, **caractérisé en ce que** l'unité d'entraînement (4) est conçue de telle manière que l'unité d'entraînement (4) peut être disposée sur la partie de paroi (1) située dans la zone d'une délimitation supérieure (2a) de l'ouverture (2) à recouvrir.

8. Dispositif d'enroulement selon l'une des revendications précédentes, **caractérisé en ce que** l'élément d'enroulement (29) agit dans la zone d'un bord inférieur de l'élément de recouvrement (35).

9. Dispositif d'enroulement selon l'une des revendications précédentes, **caractérisé en ce que** les moyens de compensation comprennent un agencement télescopique et/ou un agencement articulé entre le second corps d'enroulement (34) et l'élément d'enroulement (29).

10. Dispositif d'enroulement selon l'une des revendications précédentes, **caractérisé en ce que** le second corps d'enroulement (34) est monté flottant.

11. Dispositif d'enroulement selon l'une des revendications précédentes, **caractérisé en ce qu'**il est prévu un agencement de contre-traction (40) agissant sur le second corps d'enroulement (34) à l'aide duquel une force pouvant être prédéfinie peut être appliquée sur les moyens de compensation afin de déplacer l'élément d'enroulement (29) de manière contrôlable lors du soulèvement et de l'abaissement du bord supérieur de l'élément de recouvrement (35).
